# EUROPÄISCHE PATENTSCHRIFT

(11) **EP 3 201 369 B1**
(45) Veröffentlichungstag und Bekanntmachung des Hinweises auf die Patenterteilung: **29.08.2018**
(21) Anmeldenummer: 15766882.3
(22) Anmeldetag: 23.09.2015
(51) Int. Cl.: C21D 11/00, C22C 38/28, C21D 1/42, C21D 9/46, C22C 38/02, C22C 38/04, C22C 38/32

(54) **VERFAHREN ZUM AUSBILDEN EINES STAHLBANDES MIT UNTERSCHIEDLICHEN MECHANISCHEN EIGENSCHAFTEN ÜBER DIE BREITE DES BANDES**
METHOD FOR THE MANUFACTURE OF STEEL STRIP MATERIAL HAVING DIFFERENT MECHANICAL PROPERTIES ACROSS THE WIDTH OF THE STRIP
PROCÉDÉ DE FORMATION D'ACIER EN BANDE AYANT DIFFÉRENTES PROPRIÉTÉS MÉCANIQUES SUR LA LARGEUR D'UNE BANDE

(30) Priorität: 30.09.2014 EP 14187040
(43) Veröffentlichungstag der Anmeldung: 09.08.2017
(73) Patentinhaber: Voestalpine Stahl GmbH, 4020 Linz (AT)
(72) Erfinder: ATZMÜLLER, Peter, A-4020 Linz (AT); PICHLER, Andreas, A-4840 Vöcklabruck (AT)
(74) Vertreter: Patronus IP Patent- und Rechtsanwälte
(86) Internationale Anmeldenummer: PCT/EP2015/071899
(87) Internationale Veröffentlichungsnummer: WO 2016/050587

(56) Entgegenhaltungen:
- EP-B1- 2 529 038
- DE-A1-102008 010 062
- DE-A1-102008 049 537
- US-A1- 2009 090 437
- THOMAS MANZENREITER ET AL: "Challenges and Advantages in Usage of Zinc-Coated, Press-Hardened Components with Tailored Properties ; Zinkbeschichtete, pressgehärteter Bauteile mit massgeschneiderten Eigenschaften: Vorteile und Herausforderungen", BHM BERG- UND HÜTTENMÄNNISCHE MONATSHEFTE ; ZEITSCHRIFT FÜR ROHSTOFFE, GEOTECHNIK, METALLURGIE, WERKSTOFFE, MASCHINEN- UND ANLAGENTECHNIK, SPRINGER-VERLAG, VIENNA, Bd. 157, Nr. 3, 31. März 2012 (2012-03-31) , Seiten 97-101, XP035059241, ISSN: 1613-7531, DOI: 10.1007/S00501-012-0061-4

## Beschreibung

Die Erfindung betrifft ein Verfahren und Vorrichtungen zum Ausbilden von Metallbandmaterial mit unterschiedlichen mechanischen Eigenschaften über die Breite des Bandes.

Aus der EP 2 529 038 B1 ist ein Verfahren zur Wärmebehandlung von Metallbandmaterial bekannt, bei dem das Metallbandmaterial unterschiedliche Eigenschaften haben soll, die über die Breite des Bandes variieren. Dieses Verfahren soll insbesondere in einer kontinuierlichen Glühanlage eingesetzt werden und als Aufgabe ist formuliert, das Band unterschiedlich aufzuheizen und/oder unterschiedlich abzukühlen. Für keine dieser Aufgaben gibt die EP 2 529 038 B1 eine technische Lösung an. Die in dieser Schrift genannten Aufgaben sind das unterschiedliche Aufheizen des Stahlbandmaterials über die Breite, insbesondere über oder unter die Ac1-Temperatur und insbesondere über bzw. unter die Ac3-Temperatur, sodass innerhalb des Bandes eine Variation der absoluten Höchsttemperaturen vorhanden sein soll, wobei anschließend die unterschiedlich temperierten Bereiche unterschiedlich oder gleich schnell abgekühlt werden sollen. Hierbei ist von Nachteil, dass grundsätzlich unterschiedliche Temperaturen im Band dazu führen, dass das Stahlband unterschiedliche Wärmedehnungen oder Wärmedehnungszustände einnimmt. Dies führt zu dem in kontinuierlichen Glühanlagen gefürchteten Flattern des Bandes.

Dieses Flattern des Bandes ist lange bekannt und rührt bei herkömmlich betriebenem kontinuierlichem Glühen daher, dass das Band über die Breite nicht gleichmäßig aufgeheizt ist und somit insbesondere an den Rändern kühler ist als in der Mitte, sodass sich das Band wölbt.

Um dem entgegenzuwirken, ist es aus der EP 0 155 753 bekannt, die unterschiedlichen Temperaturen des Bandes über die Breite zu messen und mit Kühlgasströmen über die Breite des Bandes so auszugleichen, dass die Temperatur gleichmäßig verteilt ist, somit ein einheitlicher Wärmedehnungszustand erreicht wird und das Band somit eben sein dürfte.

Aus der DE 29 52 670 A1 ist ein Kühlverfahren für Stahlbänder in einer kontinuierlichen Glühe mit Überalterungszone bekannt, wobei die Abkühlung hier zweistufig mit unterschiedlichen Temperaturen erfolgt.

Aus der DE 10 2008 010 62 A1 ist ein Verfahren zum Warmwalzen und zur Wärmebehandlung eines Bandes aus Stahl bekannt. Bei diesem Verfahren soll zur wirtschaftlicheren Herstellung von hoch- und höchstfesten Bändern mit ausreichender Zähigkeit in einer Bandanlage eine zu walzende Bramme zunächst erwärmt werden, die Bramme auf die gewünschte Banddicke gewalzt werden und das Band anschließend abgekühlt werden, wobei das Band nach dem Kühlen eine über der Umgebungstemperatur liegende Temperatur aufweist und dann das Band zu einem Coil aufgehaspelt werden. Dieses Band wird dann erneut erhitzt, gekühlt und abtransportiert.

Aus der DE 10 2008 049 537 A1 ist ein Verfahren zum Kühlen eines Vorbandes oder Bandes eines Metallstrangs in einem Warmwalzwerk bekannt. Hierbei wird ein Kühlmittel auf das Vorband oder Band aufgesprüht, wobei das Vorband oder Band im Bereich der Bandkanten von der Beaufschlagung durch das Kühlmittel abgeschirmt wird, wozu Abschirmeinrichtungen vorhanden sind .Eine weitere Abschirmeinrichtung kann im Bereich eines Schlingenhebers oder in einer Kühleinrichtung zwischen Vorgerüst und Fertigstraße angeordnet sein. Hierdurch sollen Temperaturunterschiede im Band, insbesondere kühlere Bandränder, vermindert werden, um den Verschleiß des Walzwerks zu verringern.

Die US 2009/0090437 A1 betrifft ein Verfahren zum Herstellen von Metallplatten, bei denen ein Temperaturgradient über zumindest eine Richtung der Plattenebene (Breite oder Dicke bzw. Länge oder Breite) eingestellt wird.

Aus der JP 2004 11 5830 A ist ein Verfahren bekannt, mit dem eine Steuerung und Kontrolle der Kühlung erreicht werden soll und insbesondere eine Vereinheitlichung in der Breite des Bandes durch das Verhindern einer übermäßigen Auskühlung der Kantenbereiche des Stahlblechs. Auch bei diesem Verfahren werden unterschiedliche sogenannte "Windkästen" eingesetzt, durch die Kühlfluid mit unterschiedlichen Geschwindigkeiten ausgeblasen wird.

Insbesondere im Automobilbau besteht seit Längerem eine Forderung nach Stahlblechplatinen und/oder Bauteilen, die über ihre Erstreckung sowohl in der Länge als auch in der Breite unterschiedliche mechanische Eigenschaften besitzen.

Die hauptsächlich geforderten mechanischen Eigenschaften sind hier die Zugfestigkeit (Rₘ) bzw. die Duktilität. Diese beiden Eigenschaften haben unmittelbaren Einfluss auf die Sicherheit des Fahrzeuges, da sie die Crasheigenschaften beeinflussen. Sind die Teile einer Fahrgastzelle sehr fest, aber weisen eine geringe Duktilität auf, widerstehen sie zwar sehr großen Kräften, brechen dann jedoch relativ schnell, ohne hinreichend Energie aufzunehmen. Sind die Bauteile duktil aber zu wenig fest, können sie zwar Energie aufnehmen, werden aber gegebenenfalls eine zu starke Deformation zulassen. Die Lösung dieser Probleme liegt beispielsweise in zonal unterschiedlichen mechanischen Eigenschaften von solchen Bauteilen oder Blechen, die zu solchen Bauteilen verarbeitet werden.

Um diese zonalen Unterschiede zu realisieren, gibt es eine Vielzahl von Ansätzen. Ein derartiger Ansatz ist, dass Stahlmaterial mit unterschiedlichen mechanischen Eigenschaften miteinander verschweißt wird, sodass sogenannte taylor welded blanks entstehen. Werden derartige Bleche eingebaut, besitzt somit das Bauteil ebenfalls zonal unterschiedliche mechanische Eigenschaften. Hierbei kann es zudem sein, dass das gesamte Bauteil nach dem Verschweißen einer Wärmebehandlung unterzogen und anschließend abgekühlt oder abgeschreckt wird, sodass sich aufgrund der unterschiedlichen Stahlgüten unterschiedliche Gefüge ausbilden, sodass ein Teil härter ist, während der andere Teil duktiler ist. Derartige tayor welded blanks haben sich im Prinzip bewährt.

Ein weiterer Ansatz ist, eine Platine aus einem einheitlichen Stahlmaterial auszubilden, welches beispielsweise abschreckhärtbar ist. Derartige Stahlmaterialien sind beispielsweise Bor-Mangan-Stähle mit Kohlenstoffgehalten zwischen 0,10 und 0,4 %. Um eine Abschreckhärtung durchzuführen, werden diese auf eine Temperatur oberhalb der Austenitisierungstemperatur (Ac3) aufgeheizt und anschließend abgeschreckt, d. h. mit einer Abkühlgeschwindigkeit abgekühlt, die über der sogenannten kritischen Härtegeschwindigkeit liegt. Die kritische Härtegeschwindigkeit liegt beispielsweise bei 20°C/s. Unter diesen Bedingungen bildet sich aus dem Austenit Martensit, wobei es durch die Umwandlung der Stahlphasen zu einer Verzerrung im Metallgitter kommt, welche die hohe Härte bedingt. Auch andere Phasenumwandlungen innerhalb des Gitters von Stahlwerkstoffen führen zu vergleichbaren Härteeffekten, die jedoch gegebenenfalls nicht ganz so ausgeprägt sind.

In Summe lässt sich jedoch sagen, dass durch die Art und Weise des Aufheizens, durch die absolute Höhe der Behandlungstemperatur und die Art und Weise des Abkühlens bei Stahlmaterialien im weitesten Sinne Einfluss auf das Gefüge genommen werden kann, welches wiederrum Einfluss auf die Härte und Duktilität bedingt.

Um bei einer Platine aus einem einheitlichen Stahlmaterial Einfluss auf die mechanischen Eigenschaften zu nehmen, müssen somit Teile der Platine entweder unterschiedlich aufgeheizt oder unterschiedlich abgekühlt werden.

Eine Möglichkeit ist, Bereiche der Platine nicht auf die Austenitisierungstemperatur (oder andere gewünschte Umwandlungstemperaturen) zu erhitzen, sondern unter dieser Umwandlungstemperatur zu bleiben. Bei einer anschließenden uniformen Abkühlung des Bauteils werden in diesen Bereichen die Umwandlungen in andere Phasen nicht oder nicht in dieser Form stattfinden, sodass unterschiedliche Härten bzw. Duktilitäten erreicht werden.

Eine weitere Möglichkeit ist es, die Platine gleichmäßig auf eine einheitliche Temperatur zu erhitzen, jedoch nur die Bereiche, die eine große Härte haben sollen, abschreckzuhärten, während die übrigen Bereiche langsamer abgekühlt werden und somit diese Härte nicht erreichen und duktiler bleiben. Dies betrifft auch andere Umwandlungen, nicht nur die Austenit-Martensit-Umwandlung, wobei bei anderen Umwandlungen unterschiedliche Höchsttemperaturen und unterschiedliche Abkühlgeschwindigkeiten gefordert sind. Eine dritte Möglichkeit ist es, die Platine uniform aufzuheizen und uniform anschließend abschreckzuhärten, jedoch die Bereiche, die weich verbleiben sollen, anschließend wieder anzulassen und somit den Härteeffekt teilweise rückgängig zu machen.

Zusammenfassend kann gesagt werden, dass es auch bei uniformen Platinen eine Vielzahl von Möglichkeiten gibt, auf die Härte und die Duktilität bzw. die Zugfestigkeit und Bruchdehnung Einfluss zu nehmen.

Härteeffekte sind aber nicht nur bei Bor-Mangan-Stählen bekannt, die insbesondere auch als Presshärtestähle bezeichnet werden. Auch andere Stähle, wie insbesondere Dualphasen- und Multiphasenstähle wie DP- und TRIP-Stähle können mit Wärmebehandlungen, die von der grundsätzlichen Durchführung her und den entsprechenden Grenztemperaturen bzw. Kühltemperaturen her bekannt sind, bezüglich der vorgenannten mechanischen Eigenschaften eingestellt werden.

Die mechanischen Eigenschaften derartiger Stahlplatinen müssen nicht erst beim Verarbeiter über Aufheiz- und Abkühlprozesse wie das Presshärten eingestellt werden, auch Bandmaterial kann entsprechend wärmebehandelt werden. Wie es aus dem Stand der Technik bekannt ist, kann Stahlband, welches eine kontinuierliche Glühanlage durchläuft, mit unterschiedlichen Kühlraten abgekühlt werden, um insbesondere eine einheitliche Temperatur im Band sicherzustellen.

Wie im Stand der Technik auch ausgeführt, ist es eine Aufgabe, auch die Aufheizung eines Bandes über die Breite zonal unterschiedlich auszuführen.

Unabhängig von der Art der Aufheizung oder der Abkühlrate ist hierbei problematisch, dass unterschiedliche Temperaturen aufgrund der sich einstellenden Welligkeit aufgrund unterschiedlicher Wärmedehnungszustände über die Breite des Bandes im Band zum sogenannten Bandflattern führen.

Aufgabe der Erfindung ist es daher, ein Verfahren zu schaffen, mit dem Stahlbänder in einer kontinuierlichen Wärmebehandlungsanlage mit einer besseren Beherrschung des Prozesses wärmebehandelt werden.

Die Aufgabe wird mit einem Verfahren mit den Merkmalen des Anspruchs 1 gelöst. Vorteilhafte Weiterbildungen sind in den Unteransprüchen gekennzeichnet.

Die Erfinder haben erkannt, dass alleine der Gedanke, dass es vorteilhaft sein könnte, ein Band über die Breite mit unterschiedlichen Temperaturen auszubilden zwar reizvoll ist, aber eine Vielzahl von Problemen schafft, die letztlich dazu führen, dass bei herkömmlichen Anlagen entweder Bereiche des Bandes einreißen oder das Band derart verläuft und/oder schlägt und/oder flattert, dass die Anlage einerseits nicht zuverlässig gefahren werden und andererseits die Anlage beschädigt werden kann. Insbesondere werden die Führungsrollen beschädigt, es bilden sich z. B. Riefen.

Das erfindungsgemäße Verfahren sieht vor, ein Band zonal unterschiedlich zu erwärmen, wobei die Erwärmung hierbei so durchgeführt wird, dass eine hohe Trennschärfe der aufgewärmten Zonen mit mindestens 20 mm Breite erreicht werden kann.

Als eine erste erfindungsgemäße Maßnahme wird versucht, die Führung der Bänder innerhalb der Anlage auf den unterschiedlichen Wärmedehnungszustand abzustimmen.

Dies bedeutet, dass die Welligkeit des Bandes abhängig von der erwärmten Zone akzeptiert wird und dementsprechend die Führungselemente, nämlich die Rollen, auf die Welligkeit des Bandes abgestimmt sind und korrespondierend konvex oder konkav ausgebildet sind. Ist beispielsweise eine innere Zone des Bandes stärker erwärmt als die äußeren Zonen, wird sich das Band relativ harmonisch uniform wölben. Eine entsprechend bombierte Rollen bzw. zwei entsprechend bombierte Rollen führen das Band in dem Bereich, in dem es diesen Zustand besitzt.

Ist das Band beispielsweise am Rand stärker erhitzt, sodass sich lediglich ein Rand wölbt oder einzieht, sind die Rollen entsprechend hierauf abgestimmt, insbesondere teilkonkav oder teilkonvex ausgebildet.

Für unterschiedliche Bänder und unterschiedliche Erwärmungszustände über die Breite können dementsprechend unterschiedliche Rollen vorgesehen sein.

Des Weiteren wird erfindungsgemäß die zonale Erwärmung des Bandes so vorgenommen, dass eine hohe Trennschärfe der Zonen erzielt wird.

Eine hohe Trennschärfe bei der zonalen Erwärmung des Bandes wird in einer Ausführungsform erfindungsgemäß dadurch erzielt, dass oberhalb der gewünschten Erwärmungszonen des Bandes Induktoren vorgesehen sind, die die entsprechenden Zonen des Bandes gezielt auf die vorgegebene Temperatur aufheizen. Hierbei wird die Bandgeschwindigkeit und/oder die Stärke der Induktion und/oder die Größe bzw. Länge der Induktoren bezogen auf die Transportrichtung des Bandes auf die gewünschte Induktionsleistung abgestimmt.

Bei einer weiteren vorteilhaften Ausführungsform wird auf die Oberfläche des Bandes mittels Strahlern, Strahlrohren, Flammen oder dergleichen eingewirkt, wobei zur Erhöhung der zonalen Trennschärfe zwischen den entsprechenden Zonen Trennwände vorhanden sind, um eine Erwärmung der anderen Zonen bzw. der Randbereiche zu vermeiden.

Bei einer weiteren Ausführungsform kann die Emissivität des Bandes beeinflusst werden, entweder durch Anpassung der Beschichtung (z. B. Z oder ZF) als auch durch Lackierungen oder durch die Beeinflussung mittels Brennern.

Insbesondere bei der Verwendung von Flammen, Brennern, aber auch bei der Verwendung von anderen Wärmemedien, kann ein Gasstrom an der Oberfläche des Bandes durch Absaugen oder Einblasen von Gas so eingestellt werden, dass auch Heißgase von einer Zone nicht zur anderen übertreten, wobei hier auch der Abstand der Trennwände zur Bandoberfläche entsprechend eingestellt werden kann.

Zur Erhöhung der Trennschärfe kann in Bereichen, in denen das Band bzw. bestimmte Bandzonen nicht erwärmt werden sollen, parallel zur Erwärmung das Band auf der gewünschten niedrigeren Temperatur gehalten werden.

Erfindungsgemäß kann dies dadurch geschehen, dass, insbesondere bei vorhandenen Trennwänden, ein Kühlgasstrom auf die Bandoberfläche gelenkt wird, der vorteilhafterweise jedoch nicht in die Erwärmungszonen gelangt.

Bei einer weiteren vorteilhaften Ausführungsform wird dies dadurch realisiert, dass in diesen Bereichen von einer oder zwei Seiten Kühlrollen oder Rollen mit einer großen Wärmekapazität angeordnet werden, die den auf das Band einwirkenden Wärmestrom aufnehmen und so einer Erhöhung der Temperatur entgegenwirken. In diesem Fall kann eine Erwärmungseinrichtung auf das ganze Band einwirken.

Bevorzugt werden die unterschiedlichen Wärmezustände des Bandes und die entsprechende nachfolgende Kühlung über einen relativ kurzen Weg durchgeführt, beispielsweise nach einer Umlenkung über eine untere Rolle beim aufsteigenden Verlauf des Bandes bis zur oberen Rolle innerhalb der Wegstrecke zwischen unterer und oberer Rolle (oder umgekehrt), sodass der Wärmedehnungszustand über die Breite des Bandes beim Erreichen der oberen Rolle wieder uniform ist, sodass die Umlenkrollen, welche hoch belastet sind, ein ebenes Band führen können, während zwischen den Umlenkrollen Führungsrollen vorhanden sein können, die über eine entsprechende Bombierung das Flattern des Bandes zwischen den beiden Umlenkrollen begrenzen.

Beispielhaft für das Erwärmen und Kühlen in einem Pass kann vorgesehen sein, dass bei einer üblichen Passlänge von 20 m bei einer Bandlaufgeschwindigkeit von in etwa 120 m/min, dies entspricht 2 m/sec das Band ca. 10 Sekunden benötigt um einen Pass zu durchlaufen. Falls an einem Ende die lokale Erwärmung eingebracht wird und am anderen Ende die Abkühlung erfolgt erreicht ein temperaturmäßig homogenes Band die Umlenkrolle.

Dies hätte des Weiteren den Vorteil dass ein allfälliger Temperaturausgleich über das Band aufgrund der geringen Dauer der lokalen Temperatureinwirkung vermindert ist. Daher können vorteilhafterweise schärfere Trennbereiche hinsichtlich der mechanischen Eigenschaften realisiert werden.

Eine wichtige mechanische Eigenschaft ist insbesondere die Zugfestigkeit Rm.

Der Unterschied der mechanischen Eigenschaften der behandelten Zone(n) im Vergleich zum des restlichen Bandes beträgt bei der Zugfestigkeit zumindest 20 bevorzugt 50 MPa.

Bei Stählen mit einer Zugfestigkeit von größer 1000 MPa beträgt der Unterschied zumindest 5 % der Zugfestigkeit, d.h. beispielsweise bei einem Stahlband mit Rm=1600 MPa beträgt dies 80 MPa.

Die Erfindung wird anhand einer Zeichnung beispielhaft erläutert. Es zeigen dabei:
- Figur 1: eine erste Ausführungsform einer Vorrichtung zum zonalen Erwärmen eines Metallbandes in einer stark schematisierten Ansicht;
- Figur 2: eine weitere Ausführungsform einer Vorrichtung zum zonalen Erwärmen eines Metallbandes in einer stark schematisierten Ansicht;
- Figur 3: eine Führungsrolle zum Führen eines zonal erwärmten Metallbandes in einer ersten Ausführungsform;
- Figur 4: eine Führungsrolle zum Führen eines zonal erwärmten Metallbandes in einer weiteren Ausführungsform;
- Figur 5: eine weitere Ausführungsform einer Führungsrolle für ein zonal erwärmtes Metallband in einer stark schematisierten Ansicht.

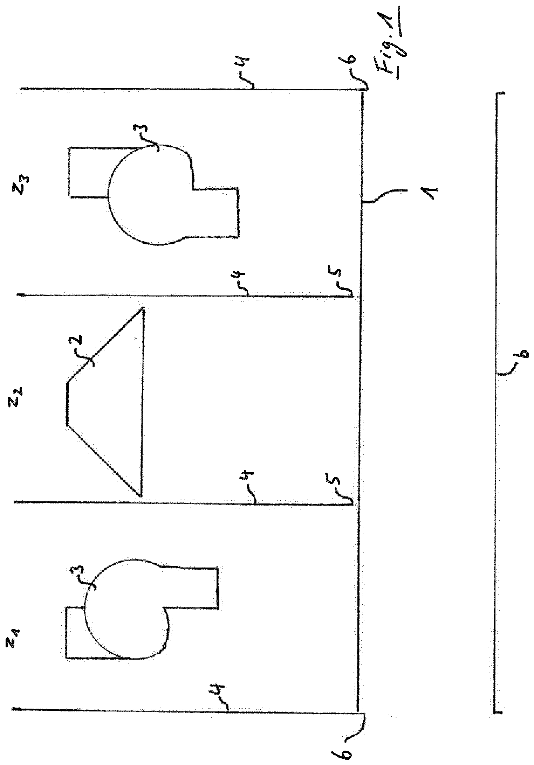

Erfindungsgemäß wird ein Metallband 1 und insbesondere ein Metallband 1, welches durch eine Einrichtung zur Wärmebehandlung des Metallbandes hindurchgeführt wird, über seine Breite B (Figur 1) zonal unterschiedlich erwärmt. Dies kann auch nach einer schon erfolgten Grunderwärmung (Rekristallisation) als Zusatzerwärmung erfolgen.

Dies bedeutet, dass das Metallband über seine Bandbreite unterschiedliche mechanische Eigenschaften, wie beispielsweise die Zugfestigkeit Rm, aufweist.

Die Zone bezieht sich auf einen Breitenabschnitt, welcher in der gesamten Höhe (Banddicke) diese unterschiedliche Eigenschaft im Vergleich zum restlichen Band aufweist. Dies gilt insbesondere für Stahlbänder mit einer maximalen Dicke von 5 mm besonders bevorzugt 0,5 mm bis 3 mm.

Bevorzugt wird für diese unterschiedliche, zonale Erwärmung eine Bandbreite von maximal 1/3 der gesamten Bandbreite vorgenommen.

Die Zone(n) können allerdings auch voneinander getrennt am Band vorliegen, d.h. zwischen 2 wärmebehandelten Breitenabschnitten auch ein unbehandelter Bandabschnitt vorliegen. Die Mindestbreite für die zonale Erwärmung beträgt 20 mm, sie kann bevorzugt größer 100 mm betragen um die mechanischen Eigenschaften effizienter einzustellen.

Die Einrichtung zum Erwärmen bzw. Wärmebehandeln des Metallbandes und insbesondere eines Stahlbandes kann eine sogenannte kontinuierliche Glühanlage sein, jedoch auch jede andere Temperierungseinrichtung, in der ein Stahlband temperiert wird, beispielsweise auch die Temperierungseinrichtung bzw. Wärmebehandlungseinrichtung bevor das Stahlband einer metallischen Schmelztauchbeschichtung unterworfen wird (Beschichtung auf Basis Zink oder auf Basis Aluminium) oder nach dem Durchtritt durch eine entsprechende Schmelztauchbeschichtung.

Um das Metallband zonal mit einer ausreichenden Trennschärfe unterschiedlich temperieren zu können und insbesondere entsprechend vorgegebener Zonen Z1, Z2, Z3 temperieren zu können, ist in einer oder mehreren Zonen, in denen eine höhere Temperatur des Bandes 1 vorgesehen ist (Z2 in Figur 1) eine Beheizungseinrichtung 2 vorgesehen. Die Beheizungseinrichtung 2 kann eine Beheizungseinrichtung sein, die an sich bekannt ist, insbesondere kann es sich um Strahlrohre, eine elektrische Beheizung, eine Flammenbeheizung, eine Flamme in einem Mantelstrahlrohr oder einen Induktor handeln. Diese Beheizungseinrichtung 2 wirkt auf die Oberfläche des Bandes 1.

Um eine Beheizung benachbarter Zonen (Z1 und Z3 in Figur 1) durch Wärmeleitung des Blechs aus der beheizten Zone (Z2) zu vermeiden, können in diesen Bereichen Kühleinrichtungen 3 vorhanden sein, welche auf die Oberfläche des Stahlbandes 1 einwirken.

Die Kühleinrichtungen 3 sind in Figur 1 als Gebläse dargestellt.

Die Gebläse können abhängig von der geforderten Kühlleistung einen Kühlgasstrom nach Menge, Geschwindigkeit und Temperatur dosiert auf die Oberfläche des Metallbandes 1 lenken. Mit der Regelung der Temperatur des Gasstromes und/oder der Menge des Gasstromes und/oder der Geschwindigkeit des Gasstromes lässt sich eine gewünschte und geforderte Kühlrate einstellen.

Vorteilhafterweise wird der auf die Oberfläche aufgebrachte Kühlgasstrom in dem Bereich aufgebracht, in dem eine Wärmeentwicklung in der beheizten Zone Z2 stattfindet, wobei der Kühlgasstrom weiter vorteilhafterweise am Ende der Erwärmungsstrecke in der Zone Z2 wieder abgezogen wird, um ein Überströmen des Gasstromes in die Heizzone Z2 zu vermeiden.

Anstelle von entsprechenden Gasströmen und der entsprechenden Einrichtung zum Erzeugen und Lenken desselben kann die Kühlung auch in anderer Weise stattfinden, insbesondere durch das Besprühen mit Flüssigkeiten oder den Kontakt mit Festkörpern.

Um insbesondere bei Kühlgasströmen, aber auch bei Erhitzungsgasströmen, insbesondere Flammeneinwirkung, die Trennschärfe zu erhöhen, können im Bereich der Zonen Z1, Z2, Z3 und insbesondere im Bereich der zonalen Erhitzung Trennwände bzw. Trennvorhänge 4 zur Abgrenzung der jeweiligen Zonen vorgesehen sein.

Hierdurch ist das Einbringen von Wärme, aber auch das Abziehen von Kühlgasströmen oder Kühlflüssigkeitsströmen erheblich verbessert. Die stahlbandseitigen Enden 5 der jeweiligen Vorhänge bzw. Trennwände 4 können dabei gering beabstandet vom Stahl- bzw. Metallband 1 sein und insbesondere eine durch die Erhitzung sich bildende Auswölbung des Bandes durch eine Veränderung der Länge und der Wände 4 kompensieren, was bedeutet, dass der Abstand der Enden 5 zur Stahlbandoberfläche 1 immer möglichst gleich ist.

Insbesondere bei strömenden Kühl- bzw. Aufheizmedien können im Bereich der Enden 5 der vorhänge bzw. Wände 4 Gasausstromöffnungen vorhanden sein, aus welchen ein Gas ausströmt, welches einen Gasvorhang zur Trennung der Atmosphären der Zonen Z1, Z2 und Z3 bildet. Hierfür sind die Wände 4 dann entsprechend so ausgebildet, dass sie einen entsprechenden Gasstrom aufnehmen und zu den Enden bzw. Endkanten 5 führen können.

Die Enden 6 der äußeren Wände 4 können dabei seitlich über das Stahlband hinaus reichen und somit auch die freien Kanten abdecken.

Diese Anordnung kann auch doppelt vorhanden sein und von zwei Seiten auf die Breite des Bandes einwirken.

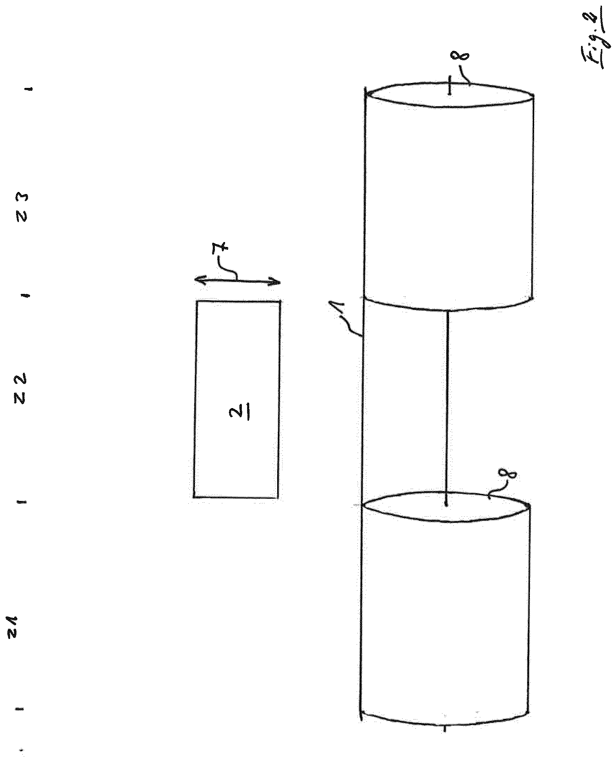

Bei einer weiteren vorteilhaften Ausführungsform (Figur 2) wird eine zu erhitzenden Zone (hier Z2) mit einer Beheizungseinrichtung mit Wärme beaufschlagt. Die Beheizungseinrichtung 2 kann eine Beheizungseinrichtung sein, die an sich für derartige Zwecke bekannt ist, insbesondere kann es sich um Strahlrohre, eine elektrische Beheizung, eine Flammenbeheizung, eine Flamme in einem Mantelstrahlrohr, einen sonstigen Brenner oder einen Induktor handeln. Diese Beheizungseinrichtung 2 wirkt auf die Oberfläche des Bandes 1.

Bei dieser Ausführungsform ist die Beheizungseinrichtung 2 beispielsweise ein Induktor, der insbesondere entsprechend der Pfeilrichtung 7 zur Oberfläche des Stahlbandes bewegbar und von diesem weg bewegbar ist.

Auf der gegenüberliegenden Seite des Stahlbandes 1 sind in den Zonen (Z1 und Z3), die nicht aufgeheizt werden sollen bzw. eine Temperatur besitzen sollen, die unter der Temperatur in der aufgeheizten Zone Z2 liegt, Einrichtungen 8 vorgesehen, welche die Wärme in den nicht aufzuheizenden oder weniger aufzuheizenden Zonen Z1 und Z3 konstant halten. Dies geschieht dadurch, dass in diesen Bereichen Wärme, die durch die Beheizungseinrichtung 2 in die Zone Z2 eingebracht wird und in die Zonen Z1 und Z3 abfließt, aufgrund der Wärmeleitung und einer möglichst hohen Wärmekapazität in die Einrichtungen 8 eingeleitet wird, sodass ein Wärmestrom von der Zone Z2 und/oder der Beheizungseinrichtung 2, der in die Zonen Z1 und Z3 fließt, von den Einrichtungen 8 absorbiert wird.

Die Einrichtungen 8 können hierbei z. B. massive Körper sein, die an dem Blechband 1 von unten anliegen, insbesondere Kühlkörper aus geeigneten Legierungen wie beispielsweise einer Amco-Legierung, wobei diese Kühlkörper zusätzlich mit einem Kühlfluid durchströmt sein können. Darüber hinaus können die Einrichtungen 8 auch als Kühlrollen 8 ausgebildet sein, die sich mit dem Stahlblechband 1 mitdrehen und auf diese Weise die Wärme einerseits aufnehmen und andererseits gegebenenfalls unterseitig an geeignete Kühleinrichtungen abgeben können.

Hierbei ist von Vorteil, dass die Trennschärfe zwischen der aufzuheizenden Zone Z2 und den Zonen mit niedriger Temperatur Z1 und Z3 sehr hoch ist.

Wird nicht die zentrale Zone Z2 aufgeheizt, sondern eine oder beide der Randzonen, wird die Anordnung entsprechend verändert.

Um die mechanischen Eigenschaften des Stahlblechbandes bzw. Metallbandes 1 entsprechend der Zonen unterschiedlich zu gestalten, ist es nach einer entsprechenden Wärmebehandlung notwendig, diese Bereiche mit entsprechenden Kühlraten abzukühlen, die ein gewünschtes Metallgefüge ergeben, welches eine entsprechende Härte, Duktilität, Zugfestigkeit oder Bruchdehnung besitzt.

Zum zonalen Abkühlen derartiger Blechbänder gibt es bereits im Stand der Technik ausreichende Lösungen.

Eine zonale Erwärmung von Stahlblechbändern führt zwangsläufig aber dazu, dass der Wärmedehnungszustand des Stahlblechbandes sich zonal ebenfalls ändert.

Inhomogene Temperaturverteilungen in Stahlblechbändern sind gefürchtet, da diese zu entsprechenden Welligkeiten und zum Flattern des Bandes führen.

Erfindungsgemäß können diese Welligkeiten durch das Vorsehen entsprechender Führungen, insbesondere nach dem zonalen Aufheizen und vor dem zonalen Abkühlen, kompensieren, das Band stabilisieren und so dem Bandflattern entgegenwirken, ohne die Welligkeit durch Druck mit ebenen Rollen zu unterdrücken, was zu Rissen in den Randbereichen des Stahlblechbandes 1 führen kann.

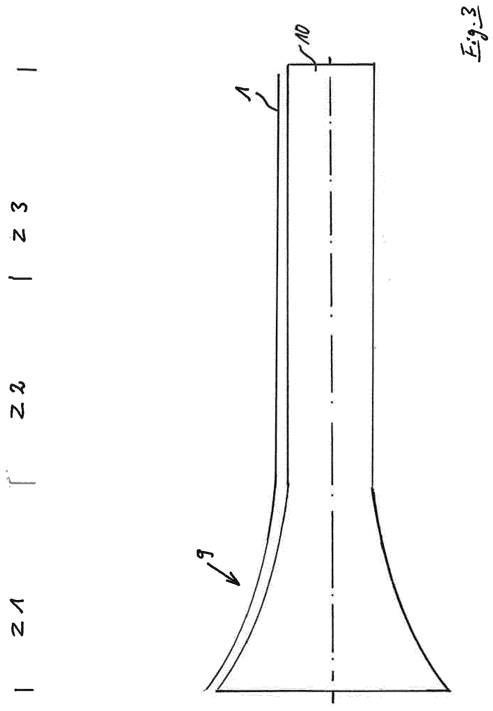

Dementsprechend wird eine Aufheizung in Zone Z1 (Figur 3) dazu führen, dass hier eine Wärmedehnung stattfindet, die dazu führt, dass sich das Band in einem randlichen Bereich 9 aufstellt. Dem wird dadurch Rechnung getragen, dass eine Führungsrolle 10 diese Welligkeit der Grundform her nach aufnimmt und dementsprechend ebenfalls gebogen ausgeführt ist. Eine korrespondierende Rolle (nicht gezeigt) kann auf der Oberseite des Bandes vorhanden sein.

In Figuren 3 bis 5 ist das Stahlband 1 jeweils mit einem Abstand zur Rolle 10 gezeichnet, um die Lagen zu verdeutlichen, in der Praxis muss das Stahlband selbstverständlich an der Rolle anliegen.

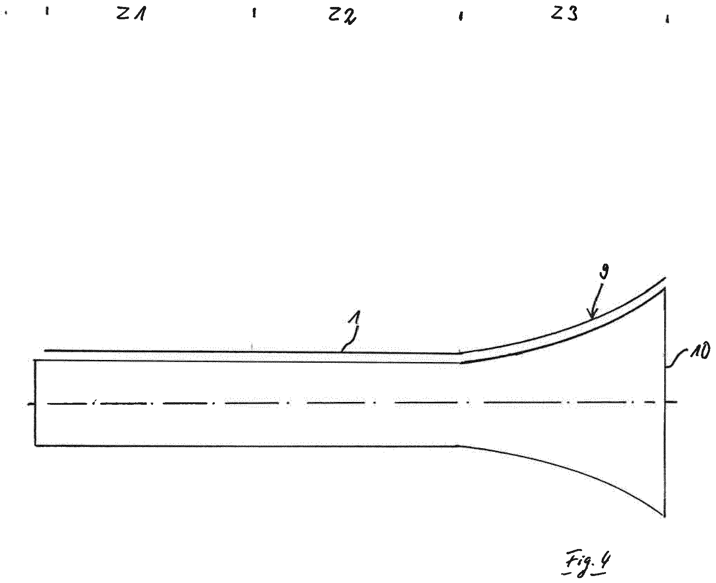

Wird demgegenüber die andere Randzone Z3 mit Wärme beaufschlagt (Figur 4), biegt sich entsprechend der dortige Randbereich 9, sodass es hier zu einer randlichen Aufwölbung kommt, die mit einer entsprechend ausgeformten Rolle 10 in korrespondierender Weise zu Figur 3 ausgeglichen wird.

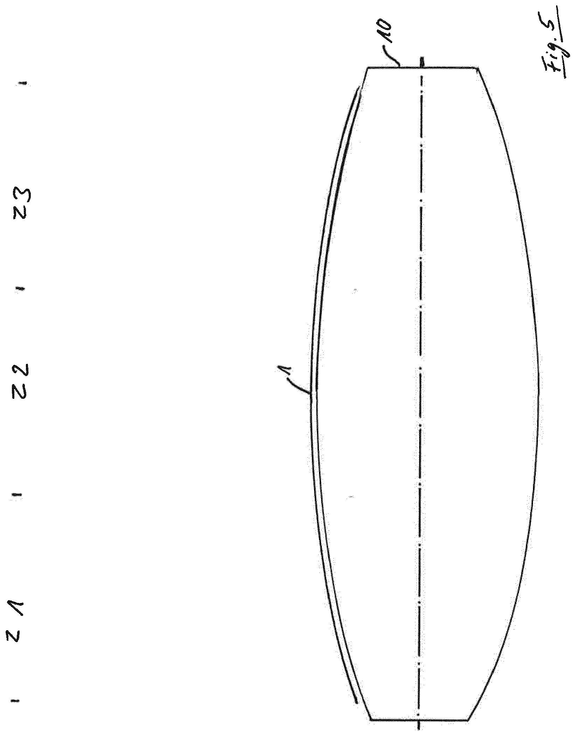

Wird ein mittiger Bereich, das heißt eine Zone Z2, mit Wärme beaufschlagt, kommt es zu einer insgesamten Wölbung des Stahlbandes 1, sodass eine bombierte Rolle 10 entsprechend Figur 5 Verwendung findet, wobei eine zweite Rolle, die entsprechend der Konvexität der Rolle 10 konkav ausgebildet ist (nicht gezeigt), vorhanden sein kann, um das Band ober- und unterseitig zu führen. Eine Rolle 10 gemäß Figur 5, die bombiert bzw. konvex ausgebildet ist, kann auch Anwendung finden, wenn die Zonen Z1 und Z3 mit Wärme beaufschlagt werden, wobei gegebenenfalls die Konvexität im Bereich der Zone Z2 dann etwas flacher ist.

Die Rollen 10 können zum Erhalten des Wärmezustandes bzw. um den Wärmezustand des jeweiligen Stahlbandes 1 nicht zu beeinflussen aus einem Material ausgebildet sein, welches gegebenenfalls nach einer Anlaufphase die Wärme hält und einen Wärmeabfluss so gering wie möglich hält. Insbesondere können die Rollen 10 aus einem keramischen Material oder aus einem Stahlmaterial mit einer keramischen Beschichtung sein, sie können auch mit einem Wärmemedium durchströmt werden.

Die unterschiedlichen Rollen 10 zur Reaktion auf eine unterschiedliche Anzahl oder Lage von erwärmten Zonen Z1, Z2, Z3 können in der entsprechenden Einrichtung zum kontinuierlichen Erwärmen bzw. Wärmebehandeln auch nach Art eines Revolverstandes angeordnet sein, sodass diese Rollen aus einer Ruhestellung in eine Arbeitsstellung schwenkbar und dort arretierbar sind, während die vorherige Rolle aus der Arbeitsstellung in die Ruhestellung verschwenkt wird.

Erfindungsgemäß können diese bombierten bzw. geformten Führungsrollen für wellige Bänder nach einer Beheizungseinrichtung 2 und vor einer Kühleinrichtung (nicht gezeigt) angeordnet sein, um das wellige Band zu stützen und gegebenenfalls die Welligkeit auch zu steuern und entsprechend auf das Band einzuwirken.

Dies setzt voraus, dass diese Erhitzungseinrichtung und die Kühleinrichtung zwischen den Umlenkrollen einer entsprechenden schlaufenbildenden Anlage angeordnet sind. Setzt sich die Welligkeit über eine Umlenkrolle einer solchen Anlage fort, ist es erfindungsgemäß vorgesehen, auch die Umlenkrolle, die das noch wellige Band umlenkt, entsprechend bombiert auszubilden.

### Beispiel

Die Erfindung wird anhand eines Beispiels erläutert.

Ein Bandstahl mit der folgenden Zusammensetzung (alle Werte in Gewichts Prozent) :
C = 0,21
Mn = 1,3
Si = 0,3
Cr = 0,3
Ti = 0,03
B = 0,0025
Rest = Eisen und erschmelzungsbedingte Verunreinigungen

besitzt ein vollmartensitisches Gefüge und soll in einer Profilieranlage weiterverarbeitet werden.

Um eine erleichterte Formbarkeit im Bereich der Profilierung zu erzielen, wird dieses Band zonal aufgewärmt und wieder abgekühlt, wodurch das Band in der erwärmten und wieder abgekühlten Zone angelassen und derart abgekühlt wird, dass es in diesem Bereich duktiler wird.

Hierzu wird das Band durch eine erfindungsgemäße Erwärmungseinrichtung geführt, wobei das Band zunächst eine Führungsrolle in einem Schlaufenbildner verlässt, anschließend zonal induktiv aufgeheizt wird und anschließend abgekühlt wird.

Das Band durchläuft einen Pass, d.h. zwei Umlenkrollen, das sind 20 Meter mit 2 m/s, d.h. in 10 Sekunden, wobei hierbei das Band von 20 °C auf 370 °C erwärmt wird und anschließend wieder abgekühlt wird.

Die Zugfestigkeit hat sich nach dem Verlassen des Passes in der entsprechenden Zone um 200 MPa gesenkt.
Das Stahlband weist eine Dicke von 2 mm auf, daher wird diese Verminderung der Zugfestigkeit über die gesamte Banddicke vorliegen.

Das erfindungsgemäße Verfahren kann auch für andere Stahllegierungen angewandt werden, siehe beispielhafte Zusammensetzungen in Tabelle 1.

| | Analyse - Tabelle 1 | | | | | | | |
|---|---|---|---|---|---|---|---|---|
| | **C** | **Si** | **Mn** | **Cr** | **Ni** | **Mo** | **P** | **v** |
| A | 0,2 | 0,3 | 1,3 | 0,3 | 0,02 | 0,002 | 0,006 | 0,002 |
| B | 0,3 | 0,3 | 1,3 | 0,3 | 0,02 | 0,002 | 0,006 | 0,002 |
| C | 0,2 | 0,3 | 2 | 0,3 | 0,02 | 0,002 | 0,006 | 0,002 |
| D | 0,3 | 0,3 | 2 | 0,3 | 0,02 | 0,002 | 0,006 | 0,002 |
| E | 0,3 | 0,3 | 2 | 0,3 | 0,02 | 0,2 | 0,006 | 0,002 |

Alle Werte in Gewichtsprozent. Rest erschmelzungsbedingte Verunreinigungen.

| | Anlasstemperatur / Rm - Tabelle 2 | | | |
|---|---|---|---|---|
| | 350 °C | 400 °C | 450 °C | 500 °C |
| A | 1400 | 1370 | 1320 | 1230 |
| B | 1580 | 1540 | 1480 | 1370 |
| C | 1450 | 1430 | 1390 | 1330 |
| D | 1620 | 1580 | 1520 | 1420 |
| E | 1650 | 1620 | 1580 | 1520 |

Alle Werte in MPa.

In Tabelle 2 werden für die Legierungen A bis E aus Tabelle 1 die jeweilige Zugfestigkeit bei einer Anlasstemperatur (am Band) von 350 °C bis 500 °C dargestellt.

Hierbei erkennt man, dass durch Variation der Anlasstemperatur bereits um 50 °C signifikante Änderungen der mechanischen Eigenschaft, in diesem Fall der Zugfestigkeit, gegeben ist. Am Beispiel der Legierung E wird beispielsweise bei einer Anlasstemperatur von 350 °C eine Zugfestigkeit von 1650 MPa erzielt.
Wenn ein zonaler Breitenbereich von bspw. 250 mm des rechten Bandbereichs mittels Induktion auf 500°C Anlasstemperatur erwärmt wird, kann in diesem Bandbereich eine Zugfestigkeit von 1520 MPa, also eine Verminderung von 130 MPa erzielt werden.

Selbstverständlich ist auch denkbar, dass nur ein gewisser Abschnitt diese Anlasstemperatur erfährt und der Rest des Bandes nicht angelassen wird.

Ein weiteres Ausführungsbeispiel ist das gezielte Anlassen von drei schmalen Streifen von jeweils 20 mm um eine gezielte Deformation des aus dem Band (übliche Bandbreite ca. 1800 mm) erzeugten Bauteils im Crashfall zur verbesserten Energieaufnahme zu ermöglichen. Hierbei wird mittels Induktionsspulen jeweils der schmale Bereich in der gesamten Banddicke angelassen. Das Aufheizen und Abkühlen erfolgt innerhalb eines Bandpasses.

Bei der Erfindung ist von Vorteil, dass ein Verfahren zum zonalen Aufheizen von Stahlblechbändern geschaffen wird, mit dem die Bänder, auch andere metallische Bänder, effektiv und nachvollziehbar mit hoher Trennschärfe zonal aufgeheizt und abgeschreckt und zonal mit unterschiedlichen mechanischen Eigenschaften ausgebildet werden können, wobei eine hohe zonale Trennschärfe erreicht wird.

Darüber hinaus kann diese Erfindung mit Vorteil nicht nur bei drei, sondern auch mit mehr oder weniger Zonen mit unterschiedlichen Beheizungszuständen und mechanischen Eigenschaften, eingesetzt werden.

Die Erfindung betrifft ein Verfahren, wobei das Band in mindestens einer zu erwärmenden Zone einen Unterschied in der Zugfestigkeit von zumindest 30 insbesondere 50 MPa aufweist.

Die Erfindung betrifft weiterhin ein Verfahren, wobei das Band in der einen oder mehreren zu erwärmende Zonen einen Unterschied in der Zugfestigkeit von zumindest 5% insbesondere 10% der Zugfestigkeit des unbehandelten Bereichs aufweist. Das erfindungsgemäße Verfahren erfordert, dass die eine oder mehrere zu erwärmenden Zonen eine Breite von zumindest jeweils 20 mm aufweisen.

### Bezuaszeichenliste:

- 1: Metallband/Stahlband
- 2: Beheizungseinrichtung
- 3: Kühleinrichtungen
- 4: Trennvorhänge
- 5: Ende
- 6: Ende
- 7: Pfeilrichtung
- 8: Einrichtungen/Kühlrollen
- 9: randlicher Bereich
- 10: Rolle

- Z1: Zone
- Z2: Zone
- Z3: Zone

## Patentansprüche

1. Verfahren zum Ausbilden von Stahlbandmaterial mit unterschiedlichen mechanischen Eigenschaften über die Breite des Bandes, wobei das Band zonal bezogen auf die Breite erhitzt wird, so dass temporär Zonen mit unterschiedlichem Erwärmungszustand geschaffen werden und das Band anschließend abgekühlt wird, um Bereiche mit unterschiedlichem Metallgefüge und damit mechanischen Eigenschaften zu schaffen, **dadurch gekennzeichnet, dass** auf eine oder mehrere zu erwärmende Zonen mit einer Beheizungseinrichtung eingewirkt wird, während die anderen Zonen gegen die Beheizung abgegrenzt oder von der Beheizung frei gestellt werden oder aktiv gekühlt werden oder ein Wärmestrom, der in die nicht zu erwärmenden Zonen eingetragen wird, in an den nicht zu erwärmenden Zonen anliegende Kontaktmassen abgeleitet wird, wobei die Beheizung des Bandes von einer Ausgangstemperatur auf eine Zieltemperatur innerhalb eines Passes, d.h. zwischen zwei Umlenkrollen einer Bandschlaufenvorrichtung erfolgt und die eine oder mehrere zu erwärmenden Zonen eine Breite von zumindest jeweils 20 mm aufweisen.

2. Verfahren nach Anspruch 1, **dadurch gekennzeichnet, dass** die Abkühlung des Bandes nach dem zonalen Aufheizen innerhalb eines Passes einer Bandschlaufenvorrichtung stattfindet.

3. Verfahren nach einem der vorhergehenden Ansprüche, **dadurch gekennzeichnet, dass** sowohl das Aufheizen als auch das Abkühlen des Bandes innerhalb desselben Passes einer Bandschlaufenvorrichtung stattfindet.

4. Verfahren nach einem der vorhergehenden Ansprüche, **dadurch gekennzeichnet, dass** das Band im Bereich einer zonalen Erwärmung und Wiederabkühlung mit Rollen geführt wird, die je nach wärmeausdehnungsbedingter Wölbung des Bandes konvex oder konkav ausgebildet sind.

5. Verfahren nach einem der vorhergehenden Ansprüche, **dadurch gekennzeichnet, dass** das Band in mindestens einer zu erwärmenden Zone einen Unterschied in der Zugfestigkeit von zumindest 30 insbesondere 50 MPa aufweist.

6. Verfahren nach einem der vorhergehenden Ansprüche, **dadurch gekennzeichnet, dass** das Band in der einen oder mehreren zu erwärmende Zonen einen Unterschied in der Zugfestigkeit von zumindest 5% insbesondere 10% der Zugfestigkeit des unbehandelten Bereichs aufweist.

## Claims

1. A method of forming metal strip material having different mechanical properties across the width of the strip, wherein the strip is heated zonally with respect to the width to temporarily create zones of different heating state and then cooling the strip to provide areas of different metal texture and thus mechanical properties, **characterized in that** one or more zones to be heated is ore are acted upon by a heating device, while the other zones are delimited against the heating or released from the heating or actively cooled, or a heat flow which is brought into the zones not to be heated is deviated at contact masses adjacent to the zones not to be heated, wherein the heating of the strip from a start temperature to a target temperature takes place within one pass, i.e. between two pulleys of a strip loop device, and the one or more zones to be heated have a width of at least 20 mm.

2. The method according to claim 1, **characterised in that** the cooling of the strip takes place after zonal heating within a pass of a belt loop device.

3. The method according to one of the preceding claims, **characterised in that** both the heating and the cooling of the strip takes place within the same pass of a strip loop device.

4. The method according to one of the preceding claims, **characterised in that** the strip is guided in the region of a zonal heating and re-cooling with rollers which are convex or concave, depending on the heat expansion-related curvature of the band.

5. The method according to one of the preceding claims, **characterised in that** the strip has a difference in tensile strength of at least 30, in particular 50 MPa in at least one zone to be heated.

6. The method according to one of the preceding claims, **characterised in that** the strip has a difference in tensile strength of at least 5%, in particular 10% of the tensile strength of the untreated zone in the one or more zones to be heated.

## Revendications

1. Procédé de formation de matériau en bande métallique ayant des propriétés mécaniques différentes sur la largeur de la bande, dans lequel la bande est chauffée zonalement par rapport à la largeur de façon à créer temporairement des zones d'état de chauffage différent et ensuite refroidir la bande pour fournir des zones avec des différentes structures métalliques et avec ceci des propriétés différentes, **caractérisé en ce que** l'on agit sur une ou plusieurs des zones à chauffer avec un dispositif de chauffage, tandis que les autres zones sont délimitées contre le chauffage ou libérées du chauffage ou activement refroidies ou un flux de chaleur, qui est apporté dans les zones non à chauffer, est dévié dans des masses de contact adjacentes au zones non à chauffer, dans lequel le chauffage de la bande à partir d'une température de départ à une température cible est effectué pendant un passage, c'est-à-dire entre deux poulies de guidage d'un dispositif à boucle de bande et que l'une ou les plusieurs zones à chauffer ont chacune une largeur d'au moins 20 mm.

2. Procédé selon la revendication 1, **caractérisé en ce que** le refroidissement de la bande a lieu après le chauffage par zones dans 1, passage d'un dispositif à boucle de bande.

3. Procédé selon l'une quelconque des revendications précédentes, **caractérisé en ce que** aussi bien le chauffage que le refroidissement de la bande sont effectués dans le même passage d'un dispositif à boucle de bande.

4. Procédé selon l'une quelconque des revendications précédentes, **caractérisé en ce que** la bande est guidée avec des poulies dans la zone d'un chauffage et d'un refroidissement zonal, qui sont formés convexes ou concaves, en fonction de la courbure de la bande liée à la dilatation thermique.

5. Procédé selon l'une quelconque des revendications précédentes, **caractérisé en ce que** la bande a une différence dans la résistance à la traction d'au moins 30, en particulier 50 MPa dans au moins une zone à chauffer.

6. Procédé selon l'une quelconque des pour revendications précédentes, **caractérisé en ce que** la bande dans l'une ou les plusieurs des zones à chauffer a une différence dans la résistance à la traction d'au moins 5 %, en particulier 10 % de la résistance à la traction de la zone non traitée.
